# EUROPÄISCHE PATENTSCHRIFT

(11) **EP 4 010 556 B1**
(45) Veröffentlichungstag und Bekanntmachung des Hinweises auf die Patenterteilung: **24.05.2023**
(21) Anmeldenummer: 20734766.7
(22) Anmeldetag: 01.07.2020
(51) Int. Cl.: E06B 3/263, E06B 3/54

(54) **VERGLASUNG MIT RFID-TRANSPONDER**
GLAZING WITH RFID TRANSPONDER
VITRAGE POURVU DE TRANSPONDEUR RFID

(30) Priorität: 09.08.2019 EP 19190994
(43) Veröffentlichungstag der Anmeldung: 15.06.2022
(73) Patentinhaber: Saint-Gobain Glass France, 92400 Courbevoie (FR)
(72) Erfinder: DRÖGE, Alicia, 52134 Herzogenrath (DE); HOLTSTIEGE, Thomas, 58332 Schwelm (DE); MARJAN, Christopher, 52072 Aachen (DE); EFFERTZ, Christian, 52080 Aachen (DE)
(74) Vertreter: Obermair, Christian Egbert
(86) Internationale Anmeldenummer: PCT/EP2020/068488
(87) Internationale Veröffentlichungsnummer: WO 2021/028110

(56) Entgegenhaltungen:
- WO-A1-00/36261
- WO-A1-2007/137719

## Beschreibung

Die Erfindung betrifft eine Verglasung mit einem metallischen Rahmen und einer in den Rahmen eingesetzten Verglasungseinheit, bevorzugt einer Isolierverglasungseinheit, wobei der Rahmen die Kanten der Verglasungseinheit umgreift und zugleich mindesten einen RFID-Transponder überdeckt. Der RFID-Transponder kann dabei als Identifikationselement verwendet werden. Die Verglasung ist insbesondere zur Bildung einer Fassadenverglasung, eines Fensters, einer Tür oder einer Innenraumabtrennung mit entsprechendem Aufbau vorgesehen.

RFID-Transponder werden vielfältig zur Kennzeichnung von Objekten eingesetzt, beispielsweise von Massiv- oder Verbundvollmaterialplatten, wie beispielsweise aus der EP 2 230 626 A1 bekannt ist.

Moderne Fenster, Türen und Fassadenverglasungen, zumindest für den Einsatz in nördlichen und gemäßigten Breiten, werden üblicherweise unter Einsatz vorgefertigter Isolierverglasungseinheiten (IGU) hergestellt, die den oben erwähnten Aufbau haben, gegebenenfalls aber auch mehr als zwei Glasschreiben im Verbund umfassen können. Derartige Isolierverglasungseinheiten stellen massenhaft hergestellte, versandte und auch eigenständig gehandelte Produkte dar, die auf ihrem Weg bis in ein Endprodukt und gegebenenfalls auch noch bei dessen Wartung und Instandhaltung eindeutig identifizierbar sein sollten.

Es ist bereits bekannt, Isolierverglasungseinheiten mit identifizierenden Kennzeichnungen zu versehen, und in der entsprechenden Praxis haben sich gewisse Anforderungen der Hersteller und Anwender ergeben:
- Die identifizierende Markierung sollte sowohl von der Innen- als auch der Außenseite des fertigen Fensters, der Tür oder der Fassade her unsichtbar sein.
- Die Kennzeichnung sollte aus einem Abstand von mindestens 30 cm "lesbar" sein.
- Die Kennzeichnung sollte weitestgehend fälschungssicher sein, also nicht ohne Weiteres überschrieben oder kopiert werden können.

Die Wirksamkeit herkömmlicher identifizierender Markierungen, wie etwa Barcodes und QR-Codes, basiert auf deren Sichtbarkeit, was für Isolierverglasungseinheiten zumindest eine Einschränkung unter obigem erstem Aspekt bedeutet. Auch die Erfüllung der zweiten Anforderung gestaltet sich damit schwierig. Der Schutz vor dem Kopieren kann nicht gewährleistet werden, da Barcodes und QR-Codes abfotografiert werden können.

Es wurde auch vorgeschlagen, Isolierverglasungseinheiten mit "elektronischen" Kennzeichen, insbesondere über Funk auslesbaren Identifikatoren, sogenannten RFID-Transpondern, zu versehen. Derartige Isolierverglasungseinheiten sind beispielsweise offenbart in der WO 00/36261 A1 oder der WO 2007/137719 A1.

Ein solcher RFID Transponder kann mit einem Passwort geschützt werden, so dass er nicht ohne erheblichen Aufwand überschrieben oder seine Funkfähigkeit zerstört werden kann.

Bestimmte Typen von Fenster- und Türrahmen, insbesondere aber Fassadenkonstruktionen, in denen Isolierverglasungseinheiten verbaut werden, bestehen vollständig oder mindestens teilweise aus einem Metall (Aluminium, Stahl...), welches den Durchgang von Funkwellen vom oder zum RFID-Transponder an der Isolierverglasungseinheit unterbricht oder zumindest stark dämpft. Aus diesem Grund hat sich insbesondere die Erfüllung der obigen zweiten Anforderung als schwierig erwiesen. Bekannte mit RFID-Transpondern versehene Isolierverglasungseinheiten sind daher nicht ohne Weiteres bei metallischen Rahmenkonstruktionen einzusetzen. Das verringert den potentiellen Einsatzbereich der so gekennzeichneten Verglasungseinheiten und somit die Akzeptanz der entsprechenden Markierungslösungen bei den Herstellern und Anwendern.

Der Erfindung liegt daher die Aufgabe zugrunde, eine verbesserte Verglasung mit Verglasungseinheit und mit Rahmenkonstruktion bereitzustellen, wobei die Rahmenkonstruktion zumindest zu einem erheblichen Teil aus einem Metall bestehen, und die auch bei solchen Einbausituationen die Erfüllung der o. g. Anforderungen gewährleistet.

Diese Aufgabe wird gemäß einem ersten Aspekt der Erfindung durch eine Verglasung mit den Merkmalen des Anspruchs 1 gelöst. Zweckmäßige Fortbildungen des Erfindungsgedankens sind Gegenstand der jeweiligen abhängigen Ansprüche.

Die Erfindung umfasst eine Verglasung, insbesondere eine Fassadenverglasung, ein Fenster, eine Tür oder eine Innenraumtrennung, umfassend:
- einen Rahmen aus einem metallischen ersten Rahmenelement, einem metallischen zweiten Rahmenelement und einem die Rahmenelemente zumindest abschnittsweise und bevorzugt vollständig umlaufend, verbindenden polymeren dritten Rahmenelement und
- einer im Rahmen angeordneten erfindungsgemäßen Verglasungseinheit, insbesondere eine Isolierverglasungseinheit,
wobei
- mindestens ein RFID-Transponder an einer der innenliegenden Flächen des Rahmens angeordnet ist,
- ein streifenförmiges Kopplungselement mit dem RFID-Transponder elektromagnetisch gekoppelt ist und
- das Kopplungselement in mindestens einem Kopplungsbereich mit einem der metallischen Rahmenelemente und bevorzugt in zwei Kopplungsbereichen mit jeweils einem der metallischen Rahmenelemente galvanisch oder kapazitiv gekoppelt ist.

Der Rahmen umgreift dabei, bevorzugt U-förmig, die Stirnseite der Verglasungseinheit und überdeckt zugleich den oder die RFID-Transponder in Durchsichtsrichtung durch die Glasscheiben. Üblicherweise sind dabei die Schenkel des ersten und zweiten Rahmenelements derart ausgebildet, dass sie den Außenbereich und den Abstandshalterrahmen in Durchsichtsrichtung durch die Verglasungseinheit zumindest vollständig verdecken.

Die Erfindung schließt den Gedanken ein, den grundsätzlich ungünstigen Abstrahlungs- und Einstrahlungsbedingungen für Funkwellen in einem metallischen Rahmen einer Verglasung durch eine spezielle Aus- bzw. Einkopplung des RFID-Signals Rechnung zu tragen. Sie schließt weiterhin den Gedanken ein, ein Kopplungselement, welches separat vom RFID-Transponder bereitgestellt wird, so an der Verglasungseinheit anzuordnen, dass es bei geeignetem Einbau in einer Verglasung optimal an deren Rahmen ankoppelt und eine Signalübertragung vom Rahmen zur Antenne des RFID-Transponders bzw. von der Antenne des RFID-Transponders zum Rahmen und damit nach außerhalb der Verglasung bewirkt.

Die Erfindung ist im Ergebnis von umfangreichen experimentellen Untersuchungen entstanden, die an Verglasungen mit dem oben erwähnten grundsätzlichen Aufbau unternommen wurden.

Die erfindungsgemäße Verglasungseinheit besteht aus oder umfasst vorteilhafterweise eine Einzelscheibe, eine Verbundscheibe oder eine Brandschutzverglasungseinheit, insbesondere mit mindestens einer intumeszenten Schicht.

Die erfindungsgemäße Verglasungseinheit besteht oder enthält mindestens eine und bevorzugt genau eine Isolierverglasungseinheit, welche umfasst:
- mindestens einen Abstandshalter, der umlaufend zu einem Abstandshalterrahmen geformt ist und einen Innenbereich umgrenzt,
- eine erste Glasscheibe, die auf einer Scheibenkontaktfläche des Abstandshalterrahmens und eine zweite Glasscheibe, die auf einer zweiten Scheibenkontaktfläche des Abstandshalterrahmens angeordnet ist, und
- die Glasscheiben über den Abstandshalterrahmen hinausragen und einen Außenbereich bilden, der zumindest abschnittsweise, bevorzugt vollständig, mit einem Versiegelungselement gefüllt ist.

Vorteilhafterweise weist der RFID-Transponder eine Dipol-Antenne auf und das Kopplungselement ist mit einem Antennenpol der Dipol-Antenne des RFID-Transponders elektromagnetisch gekoppelt.

Elektromagnetisch gekoppelt bedeutet hier, dass das Kopplungselement und der RFID-Transponder durch ein elektromagnetisches Feld gekoppelt sind, d.h. sowohl kapazitiv als auch induktiv verbunden sind und bevorzugt nicht galvanisch.

Erfindungsgemäß ist mindestens ein RFID-Transponder im Innenbereich des Rahmens am Rahmen angeordnet. Das heißt der RFID-Transponder ist an einer innenseitigen Fläche des Rahmens angeordnet, bevorzugt an einer innenseitigen Stirnfläche des Rahmens oder einer innenseitigen Fläche des ersten oder des zweiten Rahmenelements, welche parallel zu den großen Flächen der Verglasungseinheit angeordnet ist.

Was die Anwendungssituation anbelangt, haben die Erfinder insbesondere Untersuchungen an in metallische Rahmen eingebetteten Verglasungseinheiten am Beispiel von Isolierverglasungseinheiten angestellt, bei denen der Rahmen aus zwei metallenen und damit elektrisch leitenden Rahmenelementen bestehen, die über ein polymeres und elektrisch isolierendes Rahmenelement verbunden sind. Derartige Rahmen aus zwei metallischen Rahmenelementen, die durch ein polymeres Rahmenelement verbunden sind, sind besonders vorteilhaft, da durch das polymere Rahmenelement ein Wärmeübertrag von dem ersten Rahmenelement zum zweiten Rahmenelement und damit beispielsweise von einer Außenraumseite zu einer Innenraumseite deutlich reduziert wird.

Zwischen den Außenseiten der Glasscheiben und den Innenseiten der benachbarten metallischen Rahmenelemente sind dabei Elastomerprofile angeordnet, die die Verglasung abdichten und die Glasscheiben fixieren.

Bei den Untersuchungen wurden handelsübliche UHF-RFID-Transponder eingesetzt, deren Aufbau und Funktionsweise hinlänglich bekannt ist und daher hier nicht weiter beschrieben werden muss.

In einer vorteilhaften Ausgestaltung einer erfindungsgemäßen Verglasung ist der RFID-Transponder als Dipol-Antenne ausgebildet. Derartige Bauformen lassen sich besonders gut in den länglichen und streifenförmigen Außenbereich entlang des Abstandshalters und zwischen den Glasscheiben, an den Stirnflächen der Glasscheiben oder an den Außenflächen der Glasscheiben innerhalb des Rahmens anordnen.

Die Dipol-Antenne enthält zumindest einen ersten Antennenpol und einen zweiten Antennenpol oder besteht daraus. Bevorzugt sind die Antennenpole in einer Linie hintereinander fortlaufend und damit parallel zueinander angeordnet. In der Mitte zwischen den Antennenpolen ist in der Regel eine RFID-Elektronik oder eine Verbindung zu einer RFID-Elektronik angeordnet.

Das erfindungsgemäße Kopplungselement ist abschnittsweise deckungsgleich über dem RFID-Transponder angeordnet. Dabei bedeutet abschnittsweise deckungsgleich, dass das Kopplungselement in der orthogonalen Projektion auf den RFID-Transponder die Dipol-Antenne abschnittsweise überdeckt.

Ist der RFID-Transponder beispielsweise an der Innenseite der Stirnfläche des Rahmens angeordnet, so überdeckt das Kopplungselement in Blickrichtung senkrecht auf die Stirnfläche des Rahmens abschnittsweise den RFID-Transponder und insbesondere einen Antennenpol der Dipol-Antenne des RFID-Transponders. Es versteht sich, dass für eine optimale kapazitive Kopplung des Kopplungselements an den RFID-Transponder und eine erfindungsgemäße Weiterleitung des RFID-Funksignals, das Kopplungselement mindestens ähnlich groß wie die Dipol-Antenne des RFID-Transponders ist. Insbesondere ragt das Kopplungselement in der Projektion sowohl an einer Seite entlang der Erstreckungsrichtung der Dipol-Antenne als auch quer zur Erstreckungsrichtung über die Dipol-Antenne hinaus. Die Erstreckungsrichtung der Dipol-Antenne ist dabei die Längsrichtung der Dipol-Antenne, also entlang ihrer linear zueinander angeordneten Antennenpole und in Richtung deren gerader Verlängerung.

Die bei solchen RFID-Transpondersystemen genutzten Funkwellenlängen liegen üblicherweise je nach Typ im Bereich der der UHF bei 865-869 MHz (u.a. europäische Frequenzen) bzw. 902-928 MHz (US-amerikanische und andere Frequenzbänder) oder der SHF bei 2,45 GHz und 5,8 GHz. Die freigegebenen Frequenzen für UHF-RFID-Transponder unterscheiden sich regional für Asien, Europa und Amerika und sind von der ITU koordiniert.

Funksignale mit diesen Frequenzen durchdringen sowohl Holz als auch herkömmliche Kunststoffe, nicht aber Metalle. Insbesondere bei der unmittelbaren Anordnung der Dipol-Antenne auf einem metallischen Abschnitt des Rahmens kann dies zu einem Kurzschluss der Dipol-Antenne und damit zu einer unerwünschten Beeinträchtigung des RFID-Transponders führen.

Daher ist in einer bevorzugten Ausgestaltung des RFID-Transponders die Dipol-Antenne auf einem dielektrischen Trägerelement, besonders bevorzugt einem polymeren Trägerelement angeordnet. Die Dicke des Trägerelements ist dabei an das Material und insbesondere an die Dielektrizitätskonstante des Trägerelements und an die Geometrie des Dipols angepasst.

Es versteht sich, dass die Dipol-Antennen samt Elektronik per se auf einer dielektrischen und beispielsweise polymeren Trägerschicht angeordnet sein können, was die Montage und Vorfabrikation deutlich vereinfacht.

Die Erkenntnisse der Erfinder gelten grundsätzlich sowohl für passive als auch für aktive RFID-Transponder.

Im Hinblick auf den Metallrahmen, der die Verglasungseinheit umgreift, und der aufgrund elementarer physikalischer Gesetzmäßigkeiten und gemäß der darauf basierenden Kenntnis des Fachmanns die HF-Strahlung von innerhalb des Rahmens angebrachten RFID-Transpondern oder deren Antennen empfindlich stören, wenn nicht völlig unterbinden sollten, ist die vorgeschlagene Lösung überraschend. Sie erbringt den unvorhergesehenen Vorteil, dass ein erfindungsgemäß platzierter RFID-Transponder in einem relativ großen Abstand von ca. 1,5 m von der Verglasung, in die die erfindungsgemäße Verglasung eingebaut ist, noch auslesbar ist.

Es versteht sich, dass der Fachmann durch einfache Versuche Ausführungen und Positionen mit vorteilhaften Abstrahl- und Empfangseigenschaften finden kann. Die nachfolgend genannten Ausführungsbeispiele und -aspekte stellen daher primär Empfehlungen für den Fachmann dar, ohne die Ausführungsmöglichkeiten der Erfindung zu beschränken.

So versteht es sich, dass eine Verglasung mehrere RFID-Transponder, insbesondere in den Kanten- oder Außenbereichen der verschiedenen Seiten (oben, unten, rechts, links) der Verglasung aufweisen kann. Dies ist in der Regel bei Verglasungen nach dem Stand der Technik mit nur geringen Reichweiten der RFID-Transponder notwendig, um ein RFID-Signal schnell aufzufinden und die Verglasung samt der darin angeordneten Verglasungseinheit schnell zu identifizieren. Durch die erfindungsgemäße Erhöhung der Reichweite der RFID-Transponder genügen in der Regel genau ein oder wenige RFID-Transponder pro Verglasung.

In einer vorteilhaften Ausgestaltung der erfindungsgemäßen Verglasung enthält das Kopplungselement eine freitragende Metallfolie, bevorzugt aus Aluminium, einer Aluminiumlegierung, Kupfer, Silber oder Edelstahl oder besteht daraus. Bevorzugte Metallfolien weisen eine Dicke von 0,02 mm bis 0,5 mm und insbesondere von 0,09 mm bis 0,3 mm auf. Derartige Kopplungselemente lassen sich leicht in die Verglasung integrieren und sind überdies einfach und kostengünstig herstellbar. Es versteht sich, dass die Metallfolie auch durch eine Polymerfolie stabilisiert oder ein- oder beidseitig elektrisch isoliert sein kann.

In einer alternativen vorteilhaften Ausgestaltung der erfindungsgemäßen Verglasung enthält das Kopplungselement eine metallisierte Polymerfolie mit einer bevorzugten Metallisierung aus Aluminium, einer Aluminiumlegierung, Kupfer, Silber oder Edelstahl oder besteht daraus. Bevorzugte Metallschichten weisen eine Dicke von 10 µm bis 200 µm auf. Derartige Kopplungselemente lassen sich ebenfalls leicht in die Verglasung integrieren und sind überdies einfach und kostengünstig herstellbar.

Das erfindungsgemäße Kopplungselement ist vorteilhafterweise zwischen dem RFID-Transponder und mindestens einem Abschnitt eines der Rahmenelemente angeordnet.

In einer vorteilhaften Ausgestaltung ist das Kopplungselement unmittelbar auf den Rahmenelementen angeordnet und mit den metallischen Rahmenelementen kapazitiv oder galvanisch verbunden.

In einer alternativen vorteilhaften Ausgestaltung ist zwischen dem Kopplungselement und den metallischen Rahmenelementen abschnittsweise eine elektrische Isolationsschicht angeordnet, die das Kopplungselement von den metallischen Rahmenelementen galvanisch trennt. Dies ist insbesondere dann ratsam, wenn das Kopplungselement nicht selbst schon eine elektrisch isolierende Trägerfolie oder Ummantelung aufweist, um die Wärmekopplung zwischen Außenund Innenseite zu reduzieren. Durch eine derartige galvanische Isolation wird ein Kurzschluss des Kopplungselements in unerwünschten Bereichen vermieden, was seine Funktionsfähigkeit einschränken kann. Die Isolationsschicht ist beispielsweise eine Polymerfolie oder ein Lackfilm aus einem elektrisch isolierenden Material.

Das erfindungsgemäße Kopplungselement ist vorteilhafterweise zumindest abschnittsweise an der innenseitigen Stirnfläche des Rahmens angeordnet.

Das Kopplungselement überragt dabei mindestens im Bereich eines der metallischen Rahmenelemente die innenseitige Stirnfläche quer zur Erstreckungsrichtung. Die Erstreckungsrichtung des Rahmens bedeutet hier die Richtung der langen Seite des Rahmens im Gegensatz zur kurzen Seite des Rahmens, der lediglich durch Tiefe des Rahmens orthogonal zu den Flächen der Verglasung gebildet wird.

In einer vorteilhaften Ausgestaltung einer erfindungsgemäßen Verglasung überragt das Kopplungselement die innenseitige Stirnfläche des Rahmens um einen Überstand U. Das Kopplungselement ist im Bereich des Überstands an der innenseitigen Fläche des Rahmenelements, welches parallel zu den großen Flächen der Verglasung verläuft, angeordnet. Der maximale Überstand ist dabei von der Breite des metallischen Rahmenelements und insbesondere von der Dicke des Elastomerprofils abhängig, die beispielsweise 6 mm bis 7 mm beträgt.

Der Überstand U beträgt bevorzugt von 2 mm bis 30 mm, besonders bevorzugt von 5 mm bis 15 mm und insbesondere von 7 mm bis 10 mm.

Die bevorzugte Länge L des Kopplungselements, also die Länge parallel zur Erstreckungsrichtung der Dipol-Antenne, hängt von der Betriebsfrequenz des RFID-Transponders ab.

In einer weiteren vorteilhaften Ausgestaltung einer erfindungsgemäßen Verglasung weist das Kopplungselement eine Länge L parallel zur Dipol-Antenne von größer oder gleich 40% der halben Wellenlänge Lambda/2 der Betriebsfrequenz der Dipol-Antenne auf, bevorzugt von 40% bis 240%, besonders bevorzugt von 60% bis 120 % und insbesondere von 70% bis 95%.

Für RFID-Transponder im UHF-Bereich, insbesondere für RFID-Transponder bei 865-869 MHz (u.a. europäische Frequenzen) bzw. 902-928 MHz (US-amerikanische und andere Frequenzbänder), konnten besonders gute Ergebnisse für Kopplungselemente mit einer Länge L von mehr als 7 cm, bevorzugt von mehr als 10 cm und insbesondere von mehr als 14 cm erzielt werde. Die maximale Länge war dabei weniger kritisch. So führten maximale Längen von 30 cm noch zu guten Ergebnissen und guten Lesereichweiten.

In einer alternativen vorteilhaften Ausgestaltung einer erfindungsgemäßen Verglasung weist das Kopplungselement eine Länge L parallel zur Dipol-Antenne von 7 cm bis 40 cm, bevorzugt von 10 cm bis 20 cm und insbesondere von 12 cm bis 16 cm auf.

In einer vorteilhaften Ausgestaltung einer erfindungsgemäßen Verglasung überdeckt das Kopplungselement lediglich einen Antennenpol der Dipol-Antenne und ragt auf der dem anderen Antennenpol abgewandten Seite über den Antennenpol hinaus. Überdecken bedeutet hier, dass das Kopplungselement in Blickrichtung auf den RFID-Transponder vor dem jeweiligen Antennenpol angeordnet ist und diesen verdeckt. Oder mit anderen Worten, das Kopplungselement überdeckt in der orthogonalen Projektion den jeweiligen Antennenpol.

Beispielsweise überdeckt das Kopplungselement lediglich den ersten Antennenpol der Dipol-Antenne und erstreckt sich auf der dem zweiten Antennenpol abgewandten Seite über den ersten Antennenpol hinaus. Alternativ überdeckt das Kopplungselement lediglich den zweiten Antennenpol der Dipol-Antenne und erstreckt sich auf der dem ersten Antennenpol abgewandten Seite über den zweiten Antennenpol hinaus.

Vorteilhafterweise ist dabei eine Kante des Kopplungselements über der Mitte der Dipol-Antenne angeordnet und erstreckt über den ersten oder den zweiten Antennenpol. Wie Untersuchungen der Erfinder ergaben, kann das Kopplungselement auch einen geringen Versatz V zwischen der Kante des Kopplungselements und der Mitte der Dipol-Antenne aufweisen, wobei der Versatz V in der Projektion des Kopplungselements auf die Dipol-Antenne gemessen wird.

Der Versatz V bedeutet also, dass die Projektion der Kante des Kopplungselements nicht exakt in der Mitte zwischen den Antennenpolen der Dipol-Antenne angeordnet ist, sondern um einen Versatz V davon in Erstreckungsrichtung des einen Antennenpols oder in Erstreckungsrichtung des anderen Antennenpols abweicht.

Der jeweilige maximale Versatz ist dabei von der halben Wellenlänge Lambda/2 der Betriebsfrequenz der Dipol-Antenne abhängig.

Optimal ist ein Versatz von V = 0. Dennoch konnten für Abweichungen davon noch gute Ergebnisse und Lesereichweiten erzielt werden. Vorteilhafterweise beträgt der Versatz V von -20% bis +20% der halben Wellenlänge Lambda/2 der Betriebsfrequenz des RFID-Transponders, bevorzugt von -10% bis +10% und insbesondere von -5% bis +5%.

In einer weiteren vorteilhaften Ausgestaltung der Erfindung beträgt der Versatz V bei einer Betriebsfrequenz des RFID-Transponders im UHF-Bereich von -30 mm bis +30 mm, bevorzugt von -20 mm bis +20 mm und insbesondere von -10 mm bis +10 mm. Ein positives Vorzeichen bedeutet hier beispielsweise, dass die Kante des Kopplungselements in der Projektion auf dem zweiten Antennenpol angeordnet ist und der Rest des zweiten Antennenpols vollständig bedeckt ist, der erste Antennenpol hingegen vollkommen unbedeckt ist. Umgekehrt bedeutet ein negatives Vorzeichen, dass die Kante des Kopplungselements in der Projektion auf dem ersten Antennenpol angeordnet ist und ein Abschnitt des ersten Antennenpols sowie der Rest des zweiten Antennenpols vollständig bedeckt ist.

Die Breite des Kopplungselements hängt vorteilhafterweise von der Weite des Rahmens und gegebenenfalls von dem jeweiligen einseitigen oder beidseitigen Überstand über innenseitige Stirnfläche des Rahmens ab. Typische Breiten sind von 2 cm bis 10 cm und bevorzugt von 3 cm bis 5 cm.

Die konkrete Dimensionierung wird der Fachmann in Anbetracht der Abmessungen der Verglasung einerseits und des Umfassungsrahmens andererseits, insbesondere unter Beachtung der Weite des Rahmens vornehmen.

Das erfindungsgemäße Kopplungselement ist in mindestens einem Kopplungsbereich mit einem der metallischen Rahmenelemente und bevorzugt in zwei Kopplungsbereichen mit jeweils einem der metallischen Rahmenelemente galvanisch oder kapazitiv gekoppelt. Das Kopplungselement ist dabei bevorzugt in unmittelbarem Kontakt zum metallischen Rahmenelement und ist mit diesem beispielsweise galvanisch verbunden. Bevorzugt berührt das Kopplungselement das metallische Rahmenelement über seine gesamte Länge.

Das Kopplungselement muss dabei nicht fest am metallischen Rahmenelement verankert sein. Es genügt vielmehr auch ein loses Anliegen oder Anklemmen. Insbesondere genügt eine kapazitive Kopplung zwischen Kopplungselement und metallischen Rahmenelement im Kopplungsbereich.

Für die Platzierung des RFID-Transponders in der Verglasung gibt es verschiedene Möglichkeiten, aus denen der Fachmann unter Beachtung der speziellen Montagetechnologie und auch im Hinblick auf die konkrete Fassaden- oder Fensterkonstruktion eine geeignete auswählen kann.

Es versteht sich, dass mehrere RFID-Transponder auch an verschiedenen der oben genannten Positionen angeordnet sein können.

In einer weiteren vorteilhaften erfindungsgemäßen Verglasung ist der RFID-Transponder auf dem polymeren dritten Rahmenelement angeordnet und
- ein erstes streifenförmiges Kopplungselement zwischen dem ersten Antennenpol der Dipol-Antenne und dem dritten Rahmenelement angeordnet, welches mit dem ersten Rahmenelement kapazitiv oder galvanisch gekoppelt ist sowie
- ein zweites streifenförmiges Kopplungselement zwischen dem zweiten Antennenpol der Dipol-Antenne und dem dritten Rahmelement angeordnet, welches mit dem zweiten Rahmenelement kapazitiv oder galvanisch gekoppelt ist.

Dazu erstreckt sich das erste Kopplungselement nur auf einen Abschnitt des ersten Rahmenelements und nicht auf das zweite Rahmenelement. Des Weiteren erstreckt sich das zweite Kopplungselement nur auf einen Abschnitt des zweiten Rahmenelements und nicht auf das erste Rahmenelement.

Vorteile und Zweckmäßigkeiten der Erfindung ergeben sich im Übrigen aus der nachfolgenden Beschreibung von Ausführungsbeispielen und -aspekten der Erfindung anhand der Figuren. Die Zeichnungen sind rein schematische Darstellungen und nicht maßstabsgetreu. Sie schränken die Erfindung in keiner Weise ein. Es zeigen:

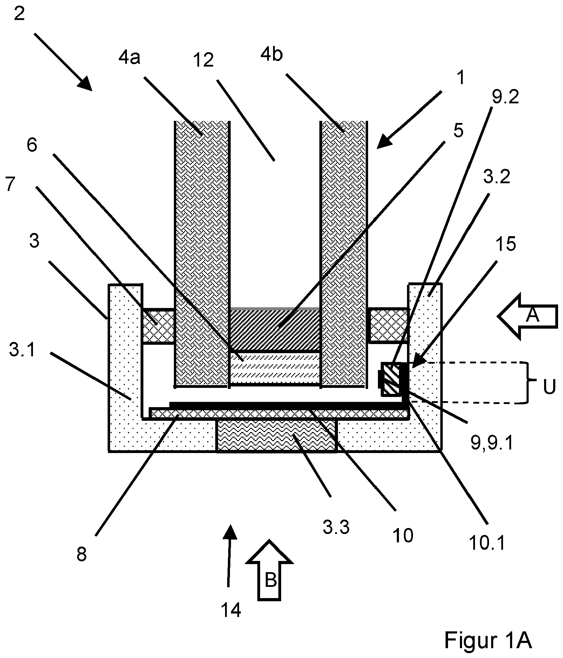

- Figur 1A: eine Detailansicht (Querschnittsdarstellung) eines Kantenbereiches einer Verglasung mit Isolierverglasungseinheit gemäß einer Ausführungsform der Erfindung,
- Figur 1: B eine Detailansicht (Draufsicht) auf einen Ausschnitt der Verglasung mit Isolierverglasungseinheit nach Figur 1A,
- Figur 1C: eine Detailansicht (Querschnittsdarstellung) der Verglasung in einer Schnittebene parallel zur Stirnfläche der Isolierverglasungseinheit nach Figur 1A,
- Figur 2A: eine Detailansicht (Querschnittsdarstellung) eines Kantenbereiches einer Verglasung mit Isolierverglasungseinheit gemäß einer weiteren Ausführungsform der Erfindung,
- Figur 2B: eine Detailansicht (Querschnittsdarstellung) der Verglasung in einer Schnittebene parallel zur Stirnfläche der Isolierverglasungseinheit nach Figur 2A, und
- Figur 3: eine Detailansicht (Querschnittsdarstellung) einer Verglasung in einer Schnittebene parallel zur Stirnfläche der Isolierverglasungseinheit gemäß einer weiteren Ausführungsform.

In den Figuren sowie der nachfolgenden Beschreibung sind die Verglasungseinheiten wie auch die Verglasungen sowie die einzelnen Komponenten jeweils, unabhängig davon, dass sich die konkreten Ausführungen unterscheiden, mit den gleichen oder ähnlichen Bezugsziffern bezeichnet.

Figur 1A zeigt eine Detailansicht (Querschnittsdarstellung) eines Kantenbereiches einer erfindungsgemäßen Verglasung 2 mit einer Isolierverglasungseinheit 1.

Es versteht sich, dass die Verglasung 2 auch eine oder mehrere Verglasungseinheiten aus einer Einzelscheibe, einer Verbundscheibe oder einer Brandschutzverglasungseinheit, insbesondere mit einer intumeszenten Schicht, aufweisen kann. Alles hier dargestellten Ausführungsformen gelten isoliert und in Kombination für alle Typen von Verglasungseinheiten.

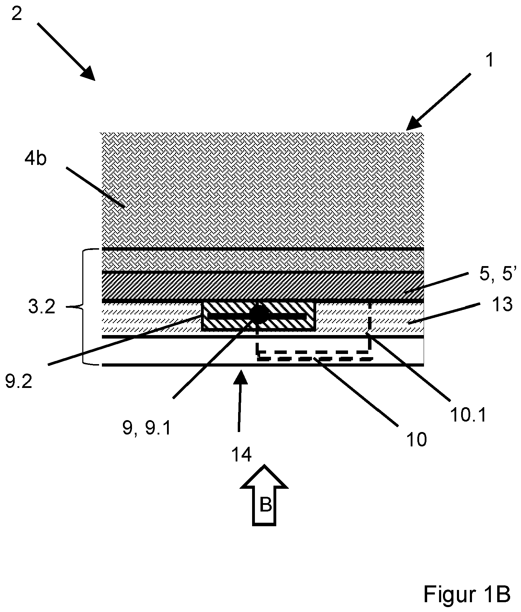

Figur 1B zeigt eine Detailansicht (Draufsicht) auf einen Ausschnitt der Verglasung 2 mit Isolierverglasungseinheit 1 nach Figur 1A mit Blickrichtung gemäß dem Pfeil A aus Figur 1A.

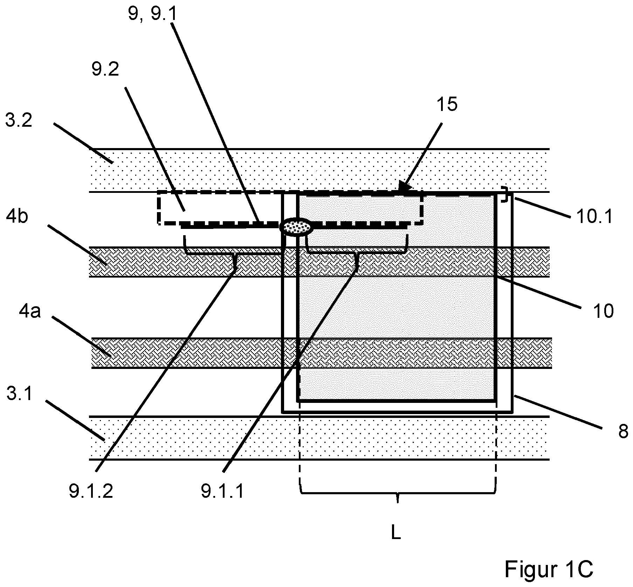

Figur 1C zeigt eine Detailansicht (Querschnittsdarstellung) der Verglasung 2 in einer Schnittebene parallel zur Stirnfläche 14 der Isolierverglasungseinheit 1 nach Figur 1A mit Blickrichtung entlang des Pfeils B auf Figur 1A.

Die Isolierverglasungseinheit 1 umfasst bei dieser Ausführung zwei Glasscheiben 4a und 4b. Diese werden durch ein nahe der Stirnfläche 14 der Isolierverglasungseinheit 1 zwischen die Glasscheiben 4a, 4b gesetzten Abstandshalter 5 in einem vorbestimmten Abstand gehalten. Der Grundkörper des Abstandshalters 5 besteht beispielsweise aus glasfaserverstärktem Styrol-Acrylnitril (SAN).

Figur 1B zeigt eine schematische Draufsicht auf die Isolierverglasungseinheit 1 in einer Blickrichtung, die durch den Pfeil A gekennzeichnet ist. Figur 1B zeigt daher die zweiten Glasscheibe 4b obenliegend.

Mehrere Abstandshalter 5 (hier beispielsweise vier) sind entlang der Seitenkanten der Glasscheiben 4a, 4b geführt und formen einen Abstandshalterrahmen 5`. Die Scheibenkontaktflächen 5.1, 5.2 der Abstandhalter 5, d.h. die Kontaktflächen der Abstandshalter 5 zu den Glasscheiben 4a, 4b, sind jeweils mit den Glasscheiben 4a bzw. 4b verklebt und dadurch mechanisch fixiert und abgedichtet. Die Klebeverbindung besteht beispielsweise aus Polyisobutylen oder Butylkautschuk.

Die Innenfläche 5.4 des Abstandshalterrahmen 5' umgrenzt zusammen mit den Glasscheiben 4a, 4b einen Innenbereich 12.

Der Abstandshalter 5 ist üblicherweise hohl (nicht gezeigt) und mit einem (nicht gezeigten) Trocknungsmittel befüllt, welches über innenseitige kleine Öffnungen (ebenfalls nicht gezeigt) etwaige in den Innenbereich 12 eingedrungene Feuchtigkeit an sich bindet. Das Trockenmittel enthält beispielsweise Molekularsiebe wie natürliche und/oder synthetische Zeolithe. Der Innenbereich 12 zwischen den Glasscheiben 4a und 4b ist beispielsweise mit einem Edelgas, etwa Argon, gefüllt.

Die Glasscheiben 4a, 4b ragen in der Regel allseitig über den Abstandshalterrahmen 5' hinaus, so dass die Außenfläche 5.3 des Abstandshalters 5 und die außenliegenden Abschnitte der Glasscheiben 4a, 4b einen Außenbereich 13 bilden. Im diesem Außenbereich 13 der Isolierverglasungseinheit 1 zwischen den Glasschreiben 4a und 4b und außerhalb des Abstandshalters 5 ist ein Versiegelungselement (Dichtprofil) 6 eingebracht. Dieses ist hier vereinfacht einteilig dargestellt. In der Praxis umfasst es üblicherweise zwei Komponenten, von denen eine die Kontaktfläche zwischen Abstandshalter 5 und Glasscheiben 4a, 4b abdichtet und vor eindringender Feuchtigkeit und Fremdeinflüssen von außen schützt. Die zweite Komponente des Versiegelungselements 6 dichtet zusätzlich und stabilisiert die Isolierverglasungseinheit 1 mechanisch. Das Versiegelungselement 6 wird beispielsweise von einem organischen Polysulfid gebildet.

Auf der Außenfläche des Abstandshalters 5, also auf der dem Außenbereich 13 zugewandten Seite des Abstandshalters 5, ist beispielsweise eine (hier nicht dargestellte) Isolationsfolie aufgebracht, die den Wärmeübergang durch den polymeren Abstandshalter 5 in den Innenbereich 12 vermindert. Die Isolationsfolie kann beispielsweise mit einem Polyurethan-Schmelzklebstoff auf dem polymeren Abstandshalter 5 befestigt werden. Die Isolationsfolie enthält beispielsweise drei polymere Schichten aus Polyethylenterephthalat mit einer Dicke von 12 µm und drei metallische Schichten aus Aluminium mit einer Dicke von 50 nm. Die metallischen Schichten und die polymeren Schichten sind dabei jeweils alternierend angebracht, wobei die beiden äußeren Lagen von polymeren Schichten gebildet werden. Das heißt, die Schichtfolge besteht aus einer polymere Schicht, gefolgt von einer metallischen Schicht, gefolgt von einer Klebeschicht, gefolgt von einer polymeren Schicht, gefolgt von einer metallischen Schicht, gefolgt von einer Klebeschicht, gefolgt von einer metallischen Schicht, gefolgt von einer polymeren Schicht.

Wie bereits erwähnt, besteht der Grundkörper des Abstandshalters 5 beispielsweise aus glasfaserverstärktem Styrol-Acrylnitril (SAN). Durch die Wahl des Glasfaseranteils im Abstandshaltergrundkörper kann dessen Wärmeausdehnungskoeffizient variiert und angepasst werden. Durch Anpassung des Wärmeausdehnungskoeffizienten des Abstandshaltergrundkörpers und der Isolationsfolie lassen sich temperaturbedingte Spannungen zwischen den unterschiedlichen Materialien und ein Abplatzen der Isolationsfolie vermeiden. Der Abstandshaltergrundkörper weist beispielsweise einen Glasfaseranteil von 35 % auf. Der Glasfaseranteil im Abstandshaltergrundkörper verbessert gleichzeitig die Festigkeit und Stabilität.

Die erste Glasscheibe 4a und die zweite Glasscheibe 4b bestehen beispielsweise aus Kalk-Natron-Glas mit einer Dicke von 3 mm und weisen beispielsweise Ausmaße von 1000 mm x 1200 mm auf. Es versteht sich, dass jede in dieser und den folgenden Ausgestaltungsbeispielen gezeigte Isolierverglasungseinheit 1 auch drei oder mehr Glasscheiben aufweisen kann.

Die Verglasung 2 umfasst des Weiteren einen beispielsweise U-förmigen Rahmen 3. Der Rahmen 3 besteht in diesem Beispiel aus einem ersten metallischen Rahmenelement 3.1, das über ein polymeres und elektrisch isolierendes drittes Rahmenelement 3.3 mit einem zweiten metallischen Rahmenelement 3.2 verbunden ist. In diesem Beispiel sind die ersten und zweiten Rahmenelemente 3.1, 3.2 L-förmig ausgebildet. Der Rahmen 3 umgreift daher U-förmig die Stirnseite 14 der Isolierverglasungseinheit 1. Die parallel zu den großen Flächen der Glasscheiben 4a, 4b verlaufenden Abschnitte der ersten und zweiten Rahmenelemente sind derart ausgebildet, dass sie zumindest den Außenbereich 13 mit dem Versiegelungselement 6 und den Abstandshalterrahmen 5' in Durchsichtsrichtung (Pfeil A) durch die Isolierverglasungseinheit 1 vollständig bedecken.

Die Isolierverglasungseinheit 1 ist auf hier nicht dargestellten Trägern, insbesondere auf Kunststoffträger oder durch Kunststoffe elektrisch isolierte Trägerelementen, angeordnet. Des Weiteren ist zwischen den metallischen Rahmenelementen 3.1, 3.2 und den Glasscheiben 4a, 4b jeweils ein Elastomerprofil 7 angeordnet, so dass die Isolierverglasungseinheit 1 fest innerhalb des Rahmens 3 gehalten wird. Das Elastomerprofil 7 hat beispielsweise eine Dicke von 6,5 mm und fixiert den Abstand zwischen den jeweiligen Rahmenelementen 3.1, 3.2 und den Glasscheiben 4a, 4b.

Die Verglasung nach den Figuren 1A bis 1C ist beispielhaft mit einem RFID-Transpondern 9 versehen, der an dem zweiten Rahmenelement 3.2 angeordnet ist. Der RFID-Transponder 9 ist dabei innerhalb des Rahmens 3 angeordnet und dort an der innenliegenden Fläche des zweiten Rahmenelements 3.2, welche parallel zu den großen Flächen der Glasscheiben 4a und 4 b verläuft. Es versteht sich, dass der RFID-Transponder 9 auch an anderen Positionen innerhalb des Rahmens 3 angeordnet sein kann, beispielsweise an einer der innenliegenden stirnseitigen Flächen der Rahmenelemente 3.1, 3.2, 3.3 oder an der innenliegenden Fläche des ersten Rahmenelements 3.1, welche sich parallel zu den großen Flächen der Glasscheiben 4a und 4b erstreckt. Dabei ist die Anordnung des RFID-Transponders 9 an einem der metallischen Rahmenelemente 3.1, 3.2 aufgrund einer besseren Signal-Ein- und Auskopplung zu bevorzugen.

Die Betriebsfrequenz des RFID-Transponders liegt im UHF-Bereich und beispielsweise um 866,6 MHz.

Des Weiteren ist an der innenliegenden Stirnseite 14 des Rahmens ein Kopplungselement 10 angeordnet, das beispielsweise aus einer 0,1 mm dicken elektrisch leitfähigen Folie und beispielsweise aus einer Aluminiumfolie besteht. Das Kopplungselement 10 erstreckt sich hier beispielsweise von der innenliegenden Stirnseite 14 des ersten Rahmenelements 3.1 über die innenliegende Stirnseite 14 des zweiten Rahmenelement 3.3 und über die innenliegende Stirnseite 14 des dritten Rahmenelements 3.2.

Das Kopplungselement 10 kann dabei unmittelbar auf den Rahmenelementen 3.1,3.2,3.3 angeordnet sein (hier in den Figuren nicht dargestellt). Dies Konfiguration ist besonders einfach und kostengünstig herzustellen.

Alternativ ist zwischen dem Kopplungselement 10 und den jeweiligen Abschnitten der Rahmenelemente 3.1,3.2,3.3 eine Isolationsschicht 8 aus beispielsweise einer polymeren Folie angeordnet. Die polymere Folie besteht beispielsweise aus einer 0,16 mm dicken Polyimid-Folien. Es versteht sich, dass die Isolationsschicht 8 auch Teil einer einseitigen oder beidseitigen elektrisch isolierenden Beschichtung des Kopplungselements 10 sein kann. Des Weiteren ist das Kopplungselement 10 bezüglich des Rahmens 3 innenliegenden um die innere Ecke des zweiten Rahmenelements 3.2 herumgeführt und in einem Bereich 10.1 des Kopplungselements 10 entlang der innenliegenden Fläche des zweiten Rahmenelements 3.2, welche parallel zu den großen Flächen der Glasscheiben 4a und 4 b verläuft, ausgebildet. Dabei ist das Kopplungselement 10 in diesem Bereich 10.1 zwischen dem RFID-Transponder 9 und dem zweiten Rahmenelement 3.2 angeordnet. Des Weiteren ist das Kopplungselement 10 in diesem Bereich 10.1 mit dem RFID-Transponder 10 elektromagnetisch gekoppelt. Zusätzlich ist das Kopplungselement 10 in diesem Bereich 10.1 mit dem zweiten Rahmenelement 3.2 beispielsweise galvanisch gekoppelt. Es versteht sich, dass das Kopplungselement 10 in diesem Bereich 10.1 auch nur elektromagnetisch mit dem zweiten Rahmenelement 3.2 gekoppelt sein kann, beispielsweise über eine Isolationsfolie und insbesondere über eine Weiterführung der Isolationsfolie 8. Der Bereich 10.1 wird im Folgenden auch einseitiger Überstand 10.1 genannt. Die Breite U des Überstand 10.1 beträgt beispielsweise 9 mm.

Eine Kante des Kopplungselements 10 ist dabei in etwa deckungsgleich über einem der beiden Antennenpole der Dipol-Antenne 9.1 angeordnet. Das heißt die Kante des Kopplungselements 10 ist im Wesentlichen in der Mitte der Dipol-Antenne 9.1 angeordnet. Deckungsgleich angeordnet bedeutet hier, dass das Kopplungselement 10 innerhalb der orthogonalen Projektion des Antennenpols der Dipol-Antenne 9.1 auf das Kopplungselement 10 angeordnet ist und diese zumindest vollständig abdeckt. Mit anderen Worten, das Kopplungselement 10 ist bezüglich einer Draufsicht auf den RFID-Transponder 9 angeordnet und verdeckt einen Antennenpol der Dipol-Antenne 9.1 vollständig.

Die Länge L des Kopplungselements 10 in seiner Erstreckungsrichtung parallel zur Erstreckungsrichtung der Dipol-Antenne 9.1 und damit parallel zur Erstreckungsrichtung der langen Seite des Rahmens 3, beträgt beispielsweise 15 cm. Damit ist das Kopplungselement 10 in etwa so lang, wie die Dipol-Antenne 9.1 und ragt somit an einer Seite um etwa 50 % über deren Ende hinaus.

Im dargestellten Beispiel handelt es sich um einen RFID-Transponder 9, bei dem die Dipol-Antenne 9.1 auf einem dielektrischen Trägerkörper 9.2 angeordnet ist. Dies ist notwendig, da sowohl das Kopplungselement 10 als auch das zweite Rahmenelement 3.2 elektrisch leitfähig sind. Ohne dielektrischen Trägerkörper 9.2 wäre die Dipol-Antenne 9.1 unmittelbar auf einer elektrisch leitenden Fläche angeordnet und dadurch "kurzgeschlossen". Durch die Verwendung eines RFID-Transponders 9 mit dielektrischem Trägerkörper 9.2 (sogenannter "on-metal"-RFID-Transponder) kann der Kurzschluss vermieden werden.

Der RFID-Transponder 9 ist im Beispiel hier zur Hälfte auf dem Kopplungselement 10 oberhalb der metallischen Rahmenelemente 3.2 und zur anderen Hälfte auf dem Rahmenelement 3.2 selbst aufgeklebt oder angeklemmt.

Wie in Figur 1C dargestellt, besteht die Dipol-Antenne 9.1 aus einem ersten Antennenpol 9.1.1 und einem zweiten Antennenpol 9.1.2, die beide in der Mitte des RFID-Transponders 9 mit einer Elektronik verbunden sind. Das Kopplungselement 10 ist dabei derart angeordnet, dass es den ersten Antennenpol 9.1.1 vollständig bedeckt und auf der, dem zweiten Antennenpol 9.1.2 abgewandten Seite über den ersten Antennenpol 9.1.1 hinausragt. Durch diese Überdeckung und den geringen Abstand zwischen dem erstem Antennenpol 9.1.1 und dem Kopplungselement 10 findet eine elektromagnetische Kopplung statt.

Wie in den Figuren 1A und 1C im Detail dargestellt ist, ist das Kopplungselement 10 in einem Kopplungsbereich 15 mit dem metallischen zweiten Rahmen 3.2 gekoppelt. Dazu liegt die leitfähige Folie des Kopplungselements 10 beispielsweise über ihre gesamte Länge am zweiten Rahmenelement 3.2 an und ist mit diesem galvanisch verbunden. Es versteht sich, dass zur Kopplung von Hochfrequenz-Signalen im Betriebsbereich des RFID-Transponders 9 auch eine kapazitive Kopplung genügt.

Wie Untersuchungen der Erfinder überraschenderweise ergaben, kann durch die Kopplung des Kopplungselements 10 an den Rahmen 3 der Verglasung 2 das Signal der Dipol-Antenne 9.1 des RFID-Transponders 9 nach außen geleitet und umgekehrt ein Signal von außen dem RFID-Transponder 9 zugeführt werden. Überraschenderweise ist die Reichweite des RFID-Signals im Vergleich zu Verglasungen 2 mit Isolierverglasungseinheiten 1 ohne Kopplungselement 10 deutlich erhöht.

So konnten mit einen RFID-Auslesegerät Signale in einem Abstand von bis zu 1,5 m ausgelesen und an den RFID-Transponder 9 gesendet werden - insbesondere auf der Seite der Isolierverglasungseinheit 1, auf der das zweite, gekoppelte, metallische Rahmelement 3.2 angeordnet ist.

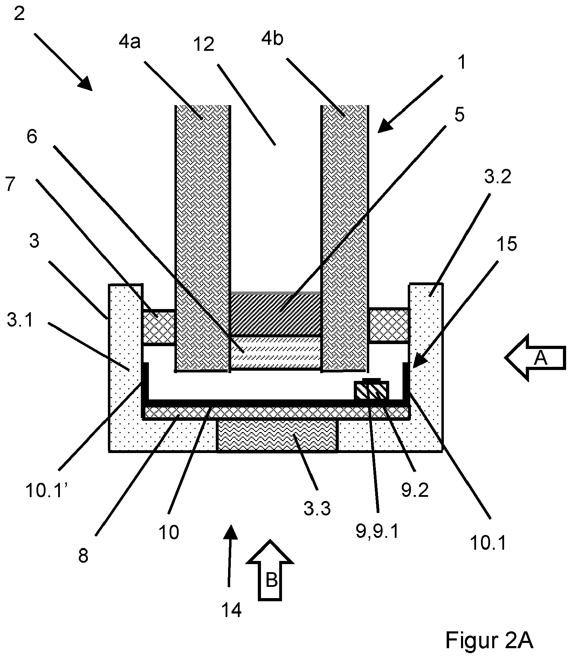

Figur 2A zeigt eine Detailansicht (Querschnittsdarstellung) eines Kantenbereiches einer Verglasung 2 mit einer Isolierverglasungseinheit 1 gemäß einer weiteren Ausführungsform der Erfindung,

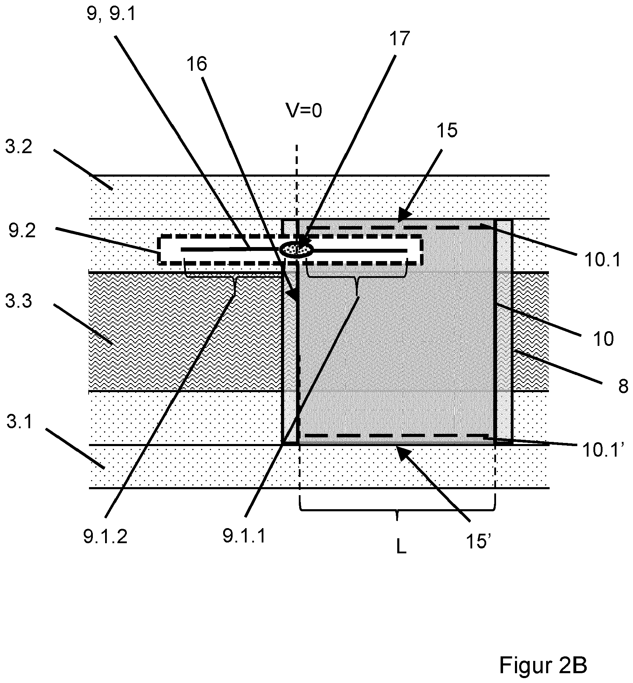

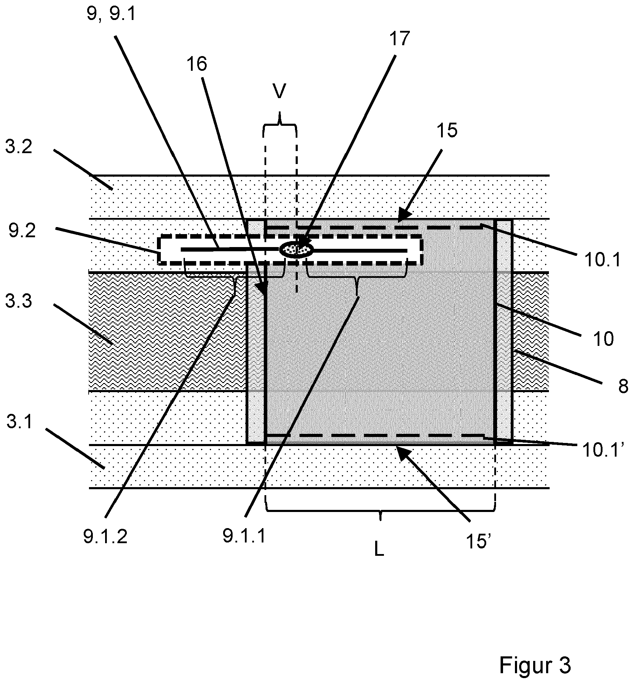

Figur 2B zeigt eine Detailansicht (Querschnittsdarstellung) der Verglasung in einer Schnittebene parallel zur Stirnfläche 14 der Verglasung 2 nach Figur 3A in Blickrichtung des Pfeils B aus Figur 2A.

Die Figuren 2A und 2B zeigen eine abgewandelte Konstruktion, die weitgehend die Elemente und den Aufbau der Verglasung 2 mit Isolierverglasungseinheit 1 nach den Figuren 1A-C hat. Insoweit sind die gleichen Bezugsziffern wie dort verwendet und der Aufbau wird hier nicht nochmals beschrieben. Die Blickrichtung in Figur 2B weist hier von der Seite der Isolierverglasungseinheit 1 in den Rahmen 3 hinein, also entgegen der Richtung des Pfeils B aus Figur 2A.

Die Isolierverglasungseinheit 1 nach den Figuren 2A und 2B unterscheidet sich von den Figuren 1A und 1C durch die Ausgestaltung des Kopplungselements 10, das hier einen beidseitigen Überstand 10.1, 10.1' über die innenliegende Stirnseite des Rahmens 2 hinaus aufweist. Dadurch ergeben sich zwei Kopplungsbereiche 15, 15', in denen das Kopplungselement 10 an die ersten und zweiten Rahmenelemente 3.1, 3.2 ankoppelt. Insgesamt führt dies zu einer Symmetrisierung der oben beschriebenen Eigenschaften zur Verbesserung Auslesereichweiten des RFID-Signals, so dass gleiche Signalstärken auf beiden Seiten der Verglasung 2 erzielt werden können.

Des Weiteren ist der RFID-Transponder 9 hier beispielsweise bezüglich des Rahmens 3 und unter Zwischenlage des Kopplungselements 10 sowie der Isolationsschicht 8 an der innenliegenden Stirnfläche des zweiten Rahmenelements 3.2 angeordnet. Es versteht sich, dass er auch auf der innenliegenden Stirnfläche des ersten Rahmenelements 3.1 oder des Rahmenelements 3.3 angeordnet sein kann.

Tabelle 1 zeigt Messergebnisse an einer erfindungsgemäßen Verglasung 2 mit Isolierverglasungseinheit 1 gemäß den Figuren 2A und 2B im Vergleich mit einem Vergleichsbeispiel. Das Vergleichsbeispiel ist eine nicht erfindungsgemäße Verglasung mit einer Isolierverglasungseinheit mit einem RFID-Transponder 9 gemäß den Figuren 1A-C, aber ohne erfindungsgemäßes Kopplungselement 10.

**Tabelle 1**

| | typische maximale Lesereichweite mit RFID-Handheld-Lesegerät |
|---|---|
| Vergleichsbeispiel (Verglasung mit RFID-Transponder ohne Kopplungselement) | 0,3 m - 0,5 m |
| Verglasung mit Isolierverglasungseinheit nach Figur 2A und 2B | 1,0 m - 1,5 m |

Für die Vergleichsmessungen wurde der RFID-Transponder 9 mit einem Handheld-RFID-Auslesegerät ausgelesen und das Auslesegerät mit zunehmendem Abstand zum RFID-Transponder 9 angeordnet. Der Abstand wurde mit einem Laser-Entfernungsmessgerät gemessen. Dabei war die maximale Lesereichweite unabhängig von der Seite, auf der relativ zur Isolierverglasungseinheit gemessen wurde.

Beim Vergleichsbeispiel eines RFID-Transponders 9, der im Außenbereich 13 einer Verglasung nach dem Stand der Technik (ohne Kopplungselement) angeordnet war, ergab sich eine maximale Lesereichweite von 0,5 m. Die in der Tabelle 1 angegebene Spannweite von 0,3 m-0,5 m ergab sich durch verschiedene Winkel, unter denen das Auslesegerät relativ zur Verglasung gehalten wurde. Durch verschiedene Fassadengeometrien kann die Lesereichweite weiter reduziert werden. Eine derartig kurze Reichweite ist für die praktische Verwendung ungenügend, da bei unbekannter Position des RFID-Transponders in der Verglasung der komplette Rahmen abgesucht werden muss.

Bei einer Isolierverglasungseinheit 1 mit einem Kopplungselement 10, welches im Rahmen 3 einer erfindungsgemäßen Verglasung 2 angeordnet ist, ergaben sich hingegen überraschenderweise Reichweiten von bis zu 1,5 m. Dies ist für die praktische Verwendung vollkommen ausreichend und entspricht knapp der Hälfte der Abstandswerte, die ein RFID-Transponder 9 gemäß Spezifikation aufweist.

Figur 3 zeigt eine Detailansicht (Querschnittsdarstellung) einer Verglasung 2 in einer Schnittebene parallel zur Stirnfläche 14 gemäß einer weiteren Ausführungsform der Erfindung. Die Blickrichtung ist hier von der Seite der Isolierverglasungseinheit 1 in den Rahmen 3 hinein, also entgegen der Richtung des Pfeils B aus Figur 2A.

Eine Kante 16 des Kopplungselement 10 ist hier nicht mittig zur Dipol-Antenne 9.1 (Mitte des Dipols 17) angeordnet, sondern um einen Versatz V von etwa 10 mm versetzt. Das Kopplungselement 10 überdeckt so auch einen Teil des zweiten Antennenpol 9.1.2. Dennoch konnten hier gute RFID-Signale gemessen werden. Insgesamt lassen sich bis zu einem Versatz V von 20% der halben Wellenlänge Lambda/2 der Betriebsfrequenz des RFID-Transponders 9 gute und praktisch verwertbare Signale beziehungsweise ausreichend große maximale Lesereichweiten erzielen. Dabei ist es unwesentlich, ob der Versatz V in Richtung des ersten Antennenpols 9.1.1 oder in Richtung des zweiten Antennenpols 9.1.2 erfolgt. Es hat sich bei Untersuchungen der Erfinder gezeigt, dass auch eine solche Anordnung die Empfangs-/Sendecharakteristik positiv beeinflusst und die erzielbare Auslesedistanz der RFID-Transponder 9 vergrößert.

Die Ausführung der Erfindung ist nicht auf die oben beschriebenen Beispiele und hervorgehobenen Ausführungsaspekte beschränkt, sondern auch in einer Vielzahl von Abwandlungen möglich, die sich für den Fachmann aus den anhängenden Ansprüchen ergeben.

### Bezugszeichenliste

- 1: Isolierverglasungseinheit
- 2: Verglasung, Isolierverglasung
- 3: Rahmen
- 3.1, 3.2: metallisches, erstes bzw. zweites Rahmenelement
- 3.3: polymeres, drittes Rahmenelement
- 4a, 4b: Glasscheiben
- 5: Abstandshalter
- 5': Abstandshalterrahmen
- 5.1, 5.2: Scheibenkontaktfläche
- 5.4: Innenfläche des Abstandshalters 5
- 6: Versiegelungselement
- 7: Elastomerprofil
- 8: Isolationsschicht
- 9: RFID-Transponder
- 9.1: Dipol-Antenne
- 9.1.1, 9.1.2: erster bzw. zweiter Antennenpol
- 9.2: dielektrisches Trägerelement
- 10: Kopplungselement
- 10': Bereich des Kopplungselements 10
- 10.1, 10.1': Überstand
- 12: Innenbereich
- 13: Außenbereich
- 13.1: Außenseite des Außenbereichs 13
- 14: Stirnfläche der Isolierverglasungseinheit 1 oder der Glasscheiben 4a, 4b
- 15: Kopplungsbereich
- 16: Kante des Kopplungselements 10
- 17: Mitte der Dipol-Antenne 9.1
- 18: Außenfläche der Glasscheibe 4a oder 4b
- 19: Innenfläche der Glasscheibe 4a oder 4b
- Pfeil A: Draufsichtsrichtung bzw. Durchsichtsrichtung
- Pfeil B: Draufsichtsrichtung
- A: Abstand
- L: Länge
- Lambda: Wellenlänge
- U: Überstand
- V: Versatz

## Patentansprüche

1. Verglasung (2), insbesondere Fassadenverglasung, Fenster, Tür oder Innenraumtrennung, umfassend
- einen Rahmen (3) aus einem metallischen ersten Rahmenelement (3.1), einem metallischen zweiten Rahmenelement (3.2) und einem die Rahmenelemente (3.1,3.2) zumindest abschnittsweise und bevorzugt vollständig umlaufend, verbindenden polymeren dritten Rahmenelement (3.3) und
- einer im Rahmen (3) angeordneten Verglasungseinheit,
wobei
- mindestens ein RFID-Transponder (9) an einer der innenliegenden Flächen des Rahmens (3) angeordnet ist,
- ein streifenförmiges Kopplungselement (10) mit dem RFID-Transponder (9) elektromagnetisch gekoppelt ist und
- das Kopplungselement (10) in mindestens einem Kopplungsbereich (15) mit einem der metallischen Rahmenelemente (3.1,3.2) und bevorzugt in zwei Kopplungsbereichen (15,15') mit jeweils einem der metallischen Rahmenelemente (3.1,3.2) galvanisch oder kapazitiv gekoppelt ist.

2. Verglasung (2) nach Anspruch 1, wobei der Rahmen (3) die Stirnflächen (14) der Verglasungseinheit umgreift und zugleich den oder die RFID-Transponder (9) in Durchsichtsrichtung (Pfeil A) durch die Glasscheiben (4a, 4b) überdeckt.

3. Verglasung (2) nach einem der Ansprüche 1 oder 2, wobei die Verglasungseinheit eine Einzelscheibe, eine Verbundscheibe, eine Brandschutzverglasungseinheit oder eine Isolierverglasungseinheit (1) umfasst oder daraus besteht und die Isolierverglasungseinheit (1)
- mindestens einen Abstandshalter (5), der umlaufend zu einem Abstandshalterrahmen (5`) geformt ist und einen Innenbereich (12) umgrenzt,
- eine erste Glasscheibe (4a), die auf einer Scheibenkontaktfläche (5.1) des Abstandshalterrahmens (5`) und eine zweite Glasscheibe (4b), die auf einer zweiten Scheibenkontaktfläche (5.2) des Abstandshalterrahmens (5`) angeordnet ist, und
- die Glasscheiben (4a, 4b) über den Abstandshalterrahmen (5`) hinausragen und ein Außenbereich (13) gebildet ist, der zumindest abschnittsweise, bevorzugt vollständig, mit einem Versiegelungselement (6) gefüllt ist,
umfasst.

4. Verglasung (2) nach einem der Ansprüche 1 bis 3, wobei das Kopplungselement (10) eine metallisierte Polymerfolie oder eine freitragende Metallfolie, bevorzugt aus Aluminium, einer Aluminiumlegierung, Kupfer, Silber oder Edelstahl enthält oder daraus besteht.

5. Verglasung (2) nach Anspruch 4, wobei die Metallisierung der Polymerfolie eine Dicke von 10 µm bis 200 µm und die Metallfolie eine Dicke von 0,02 mm bis 0,5 mm und insbesondere von 0,09 mm bis 0,3 mm aufweist.

6. Verglasung (2) nach einem der Ansprüche 1 bis 5, wobei das Kopplungselement (10) die innenseitige Stirnfläche (14) des Rahmens (3) abschnittsweise überragt, bevorzugt um einen einseitigen oder beidseitigen Überstand U von 2 mm bis 30 mm, besonders bevorzugt von 5 mm bis 15 mm und insbesondere von 7 mm bis 10 mm.

7. Verglasung (2) nach einem der Ansprüche 1 bis 6, wobei zwischen dem Kopplungselement (10) und den metallischen Rahmenelementen (3.1, 3.2) eine elektrische Isolationsschicht (8) angeordnet ist, die das Kopplungselement (10) von den metallischen Rahmenelementen (3.1,3.2) galvanisch trennt.

8. Verglasung (2) nach einem der Ansprüche 1 bis 7, wobei der RFID-Transponder (9) einer innenseitigen Fläche des Rahmens (3) angeordnet ist, bevorzugt an einer innenseitigen Stirnfläche des Rahmens (3) oder einer innenseitigen Fläche des ersten oder des zweiten Rahmenelements (3.1,3.2) welche parallel zu den großen Flächen der Verglasungseinheit angeordnet ist.

9. Verglasung (2) nach einem der Ansprüche 1 bis 8, wobei das streifenförmige Kopplungselement (10) zwischen dem RFID-Transponder (9) und mindestens einen Abschnitt eines der Rahmenelemente (3.1,3.2, 3.3) angeordnet ist.

10. Verglasung (2) nach einem der Ansprüche 1 bis 9, wobei das Kopplungselement (10) abschnittsweise deckungsgleich über dem RFID-Transponder (9) angeordnet ist.

11. Verglasung (2) nach einem der Ansprüche 1 bis 10, wobei der RFID-Transponder (9) eine Dipol-Antenne (9.1) mit einem ersten Antennenpol (9.1.1) und einem zweiten Antennenpol (9.1.2) enthält oder daraus besteht und bevorzugt die Dipol-Antenne (9.1) auf einem dielektrischen Trägerelement (9.2), besonders bevorzugt einem polymeren Trägerelement (9.2) angeordnet ist.

12. Verglasung (2) nach Anspruch 11, wobei das Kopplungselement (10) genau einen Antennenpol (9.1.1 oder 9.1.2) überdeckt und auf der dem anderen Antennenpol (9.1.2 oder 9.1.1) abgewandten Seite über den Antennenpol (9.1.1 oder 9.1.2) hinausragt.

13. Verglasung (2) nach Anspruch 11 oder 12, wobei eine Kante (16) des Kopplungselements (10) in der Projektion einen Versatz V zur Mitte (17) der Dipol-Antenne (9.1) von -20% bis +20% der halben Wellenlänge Lambda/2 der Betriebsfrequenz des RFID-Transponders (9), bevorzugt von -10% bis +10% und insbesondere von -5% bis +5%, aufweist.

14. Verglasung (2) nach Anspruch 11 oder 12, wobei eine Kante (16) des Kopplungselements (10) in der Projektion einen Versatz V zur Mitte (17) der Dipol-Antenne (9.1) bei einer Betriebsfrequenz des RFID-Transponders im UHF-Bereich von -30 mm bis +30 mm, bevorzugt von -20 mm bis +20 mm und insbesondere von -10 mm bis +10 mm aufweist.

15. Verglasung (2) nach einem der Ansprüche 1 bis 14, wobei das Kopplungselement (10) eine Länge L parallel zur Erstreckungsrichtung der Dipol-Antenne (9.1) von größer oder gleich 40 % der halben Wellenlänge Lambda/2 der Betriebsfrequenz der Dipol-Antenne (9.1), bevorzugt von 40% bis 240%, besonders bevorzugt von 60% bis 120 % und insbesondere von 70% bis 95%, hat.

16. Verglasung (2) nach einem der Ansprüche 1 bis 15, wobei das Kopplungselement (10) eine Länge L parallel zur Erstreckungsrichtung der Dipol-Antenne (9.1) von größer oder gleich 7 cm, bevorzugt von 7 cm bis 40 cm, besonders bevorzugt von 10 cm bis 20 cm und insbesondere 12 cm bis 16 cm hat.

17. Verglasung (2) nach einem der Ansprüche 1 bis 16, wobei der RFID-Transponder (9) auf dem polymeren dritten Rahmenelement (3.3) angeordnet ist und
- ein erstes streifenförmiges Kopplungselement (10) zwischen dem ersten Antennenpol (9.1.1) der Dipol-Antenne (9.1) und dem dritten Rahmenelement (3.3) angeordnet ist, welches mit dem ersten Rahmenelement (3.1) galvanisch oder kapazitiv gekoppelt ist, und
- ein zweites streifenförmiges Kopplungselement (10) zwischen dem zweiten Antennenpol (9.1.2) der Dipol-Antenne (9.1) und dem dritten Rahmelement (3.3) angeordnet ist, welches mit dem zweiten Rahmenelement (3.2) galvanisch oder kapazitiv gekoppelt ist,
und wobei
- sich das erste Kopplungselement (10) auf einen Abschnitt des ersten Rahmenelements (3.1) und nicht auf das zweite Rahmenelement (3.2) erstreckt und
- sich das zweite Kopplungselement (10) auf einen Abschnitt des zweiten Rahmenelements (3.2) und nicht auf das erste Rahmenelement (3.1) erstreckt.

18. Verwendung des RFID-Transponders (9) in einer Verglasung (2) nach einem der Ansprüche 1 bis 17 als Identifikationselement.

## Claims

1. Glazing (2), in particular façade glazing, window, door, or interior room divider, comprising
- a frame (3) consisting of a metallic first frame element (3.1), a metallic second frame element (3.2), and a connecting polymeric third frame element (3.3) surrounding the frame elements (3.1,3.2) at least in some sections and preferably completely, and
- a glazing unit arranged in the frame (3),
wherein
- at least one RFID transponder (9) is arranged on one of the inner faces of the frame (3),
- a strip-shaped coupling element (10) is electromagnetically coupled to the RFID transponder (9), and
- the coupling element (10) is galvanically or capacitively coupled, in at least one coupling region (15), to one of the metallic frame elements (3.1,3.2) and preferably, in two coupling regions (15,15'), to, in each case, one of the metallic frame elements (3.1,3.2).

2. Glazing (2) according to claim 1, wherein the frame (3) engages the end faces (14) of the glazing unit and, at the same time, covers the RFID transponder(s) (9) in the through-vision direction (arrow A) through the glass panes (4a, 4b).

3. Glazing (2) according to one of claims 1 or 2, wherein the glazing unit comprises or consists of a single pane, a composite pane, a fire-resistant glazing unit, or an insulating glazing unit (1), and the insulating glazing unit (1) comprises
- at least one spacer (5), which is circumferentially formed into a spacer frame (5`) and delimits an inner region (12),
- a first glass pane (4a), which is arranged on a pane contact surface (5.1) of the spacer frame (5`), and a second glass pane (4b), which is arranged on a second pane contact surface (5.2) of the spacer frame (5`), and
- the glass panes (4a, 4b) protrude beyond the spacer frame (5`), and an outer region (13) is formed, which is filled at least in some sections, preferably completely, with a sealing element (6).

4. Glazing (2) according to one of claims 1 through 3, wherein the coupling element (10) contains or consists of a metallized polymer film or a selfsupporting metal foil, preferably made of aluminum, an aluminum alloy, copper, silver, or stainless steel.

5. Glazing (2) according to claim 4, wherein the metallization of the polymer film has a thickness of 10 µm to 200 µm and the metal foil has a thickness of 0.02 mm to 0.5 mm and in particular of 0.09 mm to 0.3 mm.

6. Glazing (2) according to one of claims 1 through 5, wherein the coupling element (10) protrudes beyond the inside end face (14) of the frame (3) in some sections, preferably by a projection U of 2 mm to 30 mm on one side or both sides, particularly preferably of 5 mm to 15 mm, and in particular of 7 mm to 10 mm.

7. Glazing (2) according to one of claims 1 through 6, wherein an electrical insulation layer (8), which galvanically separates the coupling element (10) from the metallic frame elements (3.1,3.2), is arranged between the coupling element (10) and the metallic frame elements (3.1, 3.2).

8. Glazing (2) according to one of claims 1 through 7, wherein the RFID transponder (9) is arranged on an inside surface of the frame (3), preferably on an inside end face of the frame (3) or an inside surface of the first or second frame element (3.1,3.2) that is arranged parallel to the large surfaces of the glazing unit.

9. Glazing (2) according to one of claims 1 through 8, wherein the strip-shaped coupling element (10) is arranged between the RFID transponder (9) and at least one section of one of the frame elements (3.1,3.2, 3.3).

10. Glazing (2) according to one of claims 1 through 9, wherein the coupling element (10) is arranged congruently above the RFID transponder (9) in some sections.

11. Glazing (2) according to one of claims 1 through 10, wherein the RFID transponder (9) contains or consists of a dipole antenna (9.1) with a first antenna pole (9.1.1) and a second antenna pole (9.1.2), and preferably the dipole antenna (9.1) is arranged on a dielectric carrier element (9.2), particularly preferably a polymeric carrier element (9.2).

12. Glazing (2) according to claim 11, wherein the coupling element (10) covers exactly one antenna pole (9.1.1 or 9.1.2) and protrudes beyond the antenna pole (9.1.1 or 9.1.2) on the side facing away from the other antenna pole (9.1.2 or 9.1.1).

13. Glazing (2) according to claim 11 or 12, wherein one edge (16) of the coupling element (10) has, in the projection, an offset V from the center (17) of the dipole antenna (9.1) of -20% to +20% of the half wavelength lambda/2 of the operating frequency of the RFID transponder (9), preferably of -10% to +10%, and in particular of -5% to +5%.

14. Glazing (2) according to claim 11 or 12, wherein one edge (16) of the coupling element (10) has, in the projection, an offset V from the center (17) of the dipole antenna (9.1) at an operating frequency of the RFID transponder in the UHF range of -30 mm to +30 mm, preferably of -20 mm to +20 mm, and in particular of -10 mm to +10 mm.

15. Glazing (2) according to one of claims 1 through 14, wherein the coupling element (10) has a length L parallel to the direction of extension of the dipole antenna (9.1) greater than or equal to 40% of the half wavelength lambda/2 of the operating frequency of the dipole antenna (9.1), preferably of 40% to 240%, particularly preferably of 60% to 120%, and in particular of 70% to 95%.

16. Glazing (2) according to one of claims 1 through 15, wherein the coupling element (10) has a length L parallel to the direction of extension of the dipole antenna (9.1) greater than or equal to 7 cm, preferably of 7 cm to 40 cm, particularly preferably of 10 cm to 20 cm, and in particular 12 cm to 16 cm.

17. Glazing (2) according to one of claims 1 through 16, wherein the RFID transponder (9) is arranged on the polymeric third frame element (3.3) and
- a first strip-shaped coupling element (10) is arranged between the first antenna pole (9.1.1) of the dipole antenna (9.1) and the third frame element (3.3), which is galvanically or capacitively coupled to the first frame element (3.1), and
- a second strip-shaped coupling element (10) is arranged between the second antenna pole (9.1.2) of the dipole antenna (9.1) and the third frame element (3.3), which is galvanically or capacitively coupled to the second frame element (3.2),
and wherein
- the first coupling element (10) extends to a section of the first frame element (3.1) and not to the second frame element (3.2), and
- the second coupling element (10) extends to a section of the second frame element (3.2) and not to the first frame element (3.1).

18. Use of the RFID transponder (9) in a glazing (2) according to one of claims 1 through 17 as an identification element.

## Revendications

1. - Vitrage (2), en particulier vitrage de façade, fenêtre, porte ou cloison intérieure, comportant :
- un cadre (3) constitué d'un premier élément de cadre (3.1) métallique, d'un deuxième élément de cadre (3.2) métallique et d'un troisième élément de cadre (3.3) polymère, reliant les éléments de cadre (3.1, 3.2) au moins par sections et, de préférence, sur tout le pourtour, et
- une unité de vitrage disposée dans le cadre (3),
dans lequel
- au moins un transpondeur RFID (9) est disposé sur l'une des faces internes du cadre (3),
- un élément de couplage (10) en forme de bande est couplé électromagnétiquement au transpondeur RFID (9), et
l'élément de couplage (10) est couplé par couplage galvanique ou capacitif dans au moins une région de couplage (15) avec l'un des éléments de cadre (3.1, 3.2) métalliques et, de préférence, dans deux régions de couplage (15, 15') avec respectivement l'un des éléments de cadre (3.1 , 3.2) métalliques.

2. - Vitrage (2) selon la revendication 1, dans lequel le cadre (3) entoure les faces d'extrémité (14) de l'unité de vitrage et, en même temps, recouvre le ou les transpondeurs RFID (9) dans le sens de la vision (flèche A) à travers les vitres (4a, 4b).

3. - Vitrage (2) selon l'une des revendications 1 ou 2, dans lequel l'unité de vitrage comporte ou consiste en un vitrage simple, un vitrage feuilleté, une unité de vitrage coupe-feu ou une unité de vitrage isolant (1), et l'unité de vitrage isolant (1) comporte :
- au moins un espaceur (5), qui est formé de manière périphérique en un cadre d'espaceur (5') et qui délimite une région interne (12),
- une première vitre (4a), qui est disposée sur une face de contact de vitre (5.1) du cadre d'espaceur (5'), et une seconde vitre (4b), qui est disposée sur une seconde face de contact de vitre (5.2) du cadre d'espaceur (5'), et
- les vitres (4a, 4b) dépassent du cadre d'espaceur (5') et une région externe (13) est formée, qui est remplie au moins par sections, de préférence complètement, par un élément d'étanchéité (6).

4. - Vitrage (2) selon l'une des revendications 1 à 3, dans lequel l'élément de couplage (10) contient ou consiste en une feuille polymère métallisée ou une feuille métallique autoportante, de préférence en aluminium, en un alliage d'aluminium, en cuivre, en argent ou en acier inoxydable.

5. - Vitrage (2) selon la revendication 4, dans lequel la métallisation de la feuille polymère présente une épaisseur de 10 um à 200 um, et la feuille métallique, une épaisseur de 0,02 mm à 0,5 mm et, en particulier, de 0,09 mm à 0,3 mm.

6. - Vitrage (2) selon l'une des revendications 1 à 5, dans lequel l'élément de couplage (10) dépasse de la face d'extrémité côté interne (14) du cadre (3) par sections, de préférence d'une saillie U d'un côté ou des deux côtés de 2 mm à 30 mm, de façon particulièrement préférée, de 5 mm à 15 mm, et en particulier, de 7 mm à 10 mm.

7. - Vitrage (2) selon l'une des revendications 1 à 6, dans lequel une couche d'isolation électrique (8) est disposée entre l'élément de couplage (10) et les éléments de cadre (3.1, 3.2) métalliques, laquelle sépare galvaniquement l'élément de couplage (10) des éléments de cadre (3.1, 3.2) métalliques.

8. - Vitrage (2) selon l'une des revendications 1 à 7, dans lequel le transpondeur RFID (9) est disposé sur une face côté interne du cadre (3), de préférence sur une face d'extrémité côté interne du cadre (3) ou sur une face côté interne du premier ou du deuxième élément de cadre (3.1.3.2), laquelle est disposée parallèlement aux grandes faces de l'unité de vitrage.

9. - Vitrage (2) selon l'une des revendications 1 à 8, dans lequel l'élément de couplage (10) en forme de bande est disposé entre le transpondeur RFID (9) et au moins une section de l'un des éléments de cadre (3.1, 3.2, 3.3).

10. - Vitrage (2) selon l'une des revendications 1 à 9, dans lequel l'élément de couplage (10) est disposé au-dessus du transpondeur RFID (9) en coïncidence, par endroits.

11. - Vitrage (2) selon l'une des revendications 1 à 10, dans lequel le transpondeur RFID (9) contient ou consiste en une antenne dipôle (9.1) avec un premier pôle d'antenne (9.1.1) et un second pôle d'antenne (9.1.2), et de préférence, l'antenne dipôle (9.1) est disposée sur un élément de support diélectrique (9.2), de façon particulièrement préférée, un élément de support polymère (9.2) .

12. - Vitrage (2) selon la revendication 11, dans lequel l'élément de couplage (10) recouvre exactement un pôle d'antenne (9.1.1 ou 9.1.2) et dépasse du pôle d'antenne (9.1.1 ou 9.1.2) sur le côté opposé à l'autre pôle d'antenne (9.1.2 ou 9.1.1).

13. - Vitrage (2) selon l'une des revendications 11 ou 12, dans lequel un bord (16) de l'élément de couplage (10) présente, en projection, un décalage V par rapport au centre (17) de l'antenne dipôle (9.1) de -20% à +20% de la demi-longueur d'onde lambda/2 de la fréquence de fonctionnement du transpondeur RFID (9), de préférence de -10% à +10% et, en particulier, de -5% à +5%.

14. - Vitrage (2) selon l'une des revendications 11 ou 12, dans lequel un bord (16) de l'élément de couplage (10) présente, en projection, un décalage V par rapport au centre (17) de l'antenne dipôle (9.1) à une fréquence de fonctionnement du transpondeur RFID dans la bande UHF de -30 mm à +30 mm, de préférence de -20 mm à +20 mm et, en particulier, de -10 mm à +10 mm.

15. - Vitrage (2) selon l'une des revendications 1 à 14, dans lequel l'élément de couplage (10) a une longueur L parallèle à la direction d'étendue de l'antenne dipôle (9.1) supérieure ou égale à 40% de la demi-longueur d'onde lambda/2 de la fréquence de fonctionnement de l'antenne dipôle (9.1), de préférence, de 40% à 240%, de façon particulièrement préférée, de 60% à 120% et, en particulier, de 70% à 95%.

16. - Vitrage (2) selon l'une des revendications 1 à 15, dans lequel l'élément de couplage (10) a une longueur L parallèle à la direction d'étendue de l'antenne dipôle (9.1) supérieure ou égale à 7 cm, de préférence de 7 cm à 40 cm, de façon particulièrement préférée de 10 cm à 20 cm et, en particulier, de 12 cm à 16 cm.

17. - Vitrage (2) selon l'une des revendications 1 à 16, dans lequel le transpondeur RFID (9) est disposé sur le troisième élément de cadre (3.3) polymère et
- un premier élément de couplage (10) en forme de bande est disposé entre le premier pôle d'antenne (9.1.1) de l'antenne dipôle (9.1) et le troisième élément de cadre (3.3), lequel est couplé par couplage galvanique ou capacitif au premier élément de cadre (3.1), et
- un second élément de couplage (10) en forme de bande est disposé entre le second pôle d'antenne (9.1.2) de l'antenne dipôle (9.1) et le troisième élément de cadre (3.3), lequel est couplé par couplage galvanique ou capacitif au deuxième élément de cadre (3.2),
et dans lequel
- le premier élément de couplage (10) s'étend sur une section du premier élément de cadre (3.1) et non sur le deuxième élément de cadre (3.2), et
- le deuxième élément de couplage (10) s'étend sur une section du deuxième élément de cadre (3.2) et non sur le premier élément de cadre (3.1).

18. - Utilisation du transpondeur RFID (9) dans un vitrage (2) selon l'une des revendications 1 à 17 comme élément d'identification.
